# EUROPEAN PATENT APPLICATION

(11) **EP 4 850 973 A1**
(43) Date of publication of application: **09.12.2026**
(21) Application number: 24922362.9
(22) Date of filing: 30.01.2024
(51) Int. Cl.: B60L 58/00

(54) **METHOD FOR CONTROLLING SUPPLY OF POWER TO ELECTRIC VEHICLE, AND SYSTEM FOR CONTROLLING SUPPLY OF POWER TO ELECTRIC VEHICLE**

(71) Applicant: Nissan Motor Co., Ltd., Yokohama-shi, Kanagawa 221-0023 (JP)
(72) Inventor: OKABE, Atsushi, Atsugi-shi, Kanagawa 243-0123 (JP)
(74) Representative: Hoefer & Partner Patentanwälte mbB
(86) International application number: PCT/JP2024/002798
(87) International publication number: WO 2025/163728

(57) **Abstract**

A power supply control method for an electric vehicle in which one of a plurality of functional elements constituting the electric vehicle is an external power supply system for supplying power to outside, the power supply control method including: setting allocated power individually for the plurality of functional elements serving as operation targets for a driver; setting a default priority level for using the functional elements for the plurality of functional elements; and when available supply power becomes lower than a total sum of the allocated power, the available supply power being power capable of being simultaneously supplied to the plurality of functional elements by a battery mounted on the electric vehicle, limiting the allocated power of the functional elements in order of increasing default priority level such that the total sum of the allocated power does not exceed the available supply power, wherein when information on a requested priority level of the external power supply system is input in accordance with a request from a driver, information on a modified priority level sequence including the requested priority level is generated for the plurality of functional elements, and the allocated power of the functional elements is limited in order of increasing priority level in the modified priority level sequence such that the total sum of the allocated power does not exceed the available supply power.

## Description

### TECHNICAL FIELD

The present invention relates to a power supply control method for an electric vehicle and a power supply control system for an electric vehicle.

### BACKGROUND ART

JP6164196B discloses a technology for performing external power supply from a battery of an electric vehicle.

### SUMMARY OF INVENTION

In JP6164196B, a request from a driver for external power supply is not reflected in situations where the available output power of the battery is limited due to a decrease in the temperature of the battery, a decrease in the state of charge of the battery, and so forth, thereby causing discomfort to the driver.

Thus, an object of the present invention is to provide a power supply control method for an electric vehicle and a power supply control system for an electric vehicle that are capable of executing external power supply based on the request from a driver even in a state in which the available output power of the battery mounted on the electric vehicle has decreased.

According to one aspect of the present invention, provided is a power supply control method for an electric vehicle in which one of a plurality of functional elements constituting the electric vehicle is an external power supply system for supplying power to outside, the power supply control method including: setting allocated power individually for the plurality of functional elements serving as operation targets for a driver; setting a default priority level for using the functional elements for the plurality of functional elements; and when available supply power becomes lower than a total sum of the allocated power, the available supply power being power capable of being simultaneously supplied to the plurality of functional elements by a battery mounted on the electric vehicle, limiting the allocated power of the functional elements in order of increasing default priority level such that the total sum of the allocated power does not exceed the available supply power. In this power supply control method, when information on a requested priority level of the external power supply system is input in accordance with a request from a driver, information on a modified priority level sequence including the requested priority level is generated for the plurality of functional elements, and the allocated power of the functional elements is limited in order of increasing priority level in the modified priority level sequence such that the total sum of the allocated power does not exceed the available supply power.

### BRIEF DESCRIPTION OF DRAWINGS

[FIG. 1] FIG. 1 is a block diagram of a power supply control system for an electric vehicle of the present embodiment.
[FIG. 2] FIG. 2 is a diagram showing an initial state of an operation screen appearing on a touch panel of the power supply control system for the electric vehicle.
[FIG. 3] FIG. 3 is a diagram showing a state in which the driver has selected a driver setting mode by tapping a driver setting mode icon in FIG. 2.
[FIG. 4] FIG. 4 is a diagram showing an initial state of the driver setting mode.
[FIG. 5] FIG. 5 is a diagram showing a state in which priority levels are indicated by numbers as a result of the driver performing tap operations on selection icons for air conditioning power, drive power, in-vehicle power supply, and off-vehicle power supply displayed in the driver setting mode in the order of the in-vehicle power supply, the air conditioning power, and the drive power.
[FIG. 6] FIG. 6 is a diagram showing, when the driver setting mode is set as shown in FIG. 5, the relationship among the available output power, the available supply power, and the total sum of first allocated power allocated as auxiliary equipment power, fourth allocated power allocated as in-vehicle supplied power, third allocated power allocated as the air conditioning power, and second allocated power allocated as the drive power, in a case in which the available output power is higher than the total sum of the allocated power.
[FIG. 7] FIG. 7 is a diagram showing a case in which, from the state shown in FIG. 6, the available output power becomes lower than the total sum of the allocated power and the second allocated power is limited.
[FIG. 8] FIG. 8 is a diagram showing a case in which, from the state shown in FIG. 7, the available output power is further decreased, the second allocated power is set to a predetermined first lower limit power, and the third allocated power is further limited.
[FIG. 9] FIG. 9 is a diagram showing a case in which, from the state shown in FIG. 8, the available output power is further decreased and the third allocated power is set to zero.
[FIG. 10] FIG. 10 is a diagram showing a case in which, from the state shown in FIG. 9, the available output power is further decreased and the fourth allocated power is limited.
[FIG. 11] FIG. 11 is a diagram showing a state in which the priority levels are indicated by numbers as a result of the driver performing tap operations on the selection icons for the air conditioning power, the drive power, the in-vehicle power supply, and the off-vehicle power supply displayed in the driver setting mode in the order of the in-vehicle power supply, the off-vehicle power supply, and the air conditioning power.
[FIG. 12] FIG. 12 is a diagram showing, when the driver setting mode is set as shown in FIG. 11, the relationship among the available output power, the available supply power, and the total sum of the first allocated power allocated as the auxiliary equipment power, the fourth allocated power allocated as the in-vehicle supplied power, fifth allocated power allocated as the off-vehicle supplied power, and the third allocated power allocated as the air conditioning power, in a case in which the available output power is higher than the total sum of the allocated power.
[FIG. 13] FIG. 13 is a diagram showing a case in which, from the state shown in FIG. 12, the available output power becomes lower than the total sum of the allocated power and the third allocated power is limited.
[FIG. 14] FIG. 14 is a diagram showing a case in which, from the state shown in FIG. 13, the available output power is further decreased, the third allocated power is set to zero, and the fifth allocated power is further limited.
[FIG. 15] FIG. 15 is a diagram showing a case in which, from the state shown in FIG. 14, the available output power is further decreased and the fifth allocated power is set to zero because the power allocatable to the off-vehicle power supply becomes lower than a third lower limit power set for the fifth allocated power.
[FIG. 16] FIG. 16 is a diagram showing the priority levels of the first allocated power allocated as the auxiliary equipment power, the third allocated power allocated as the air conditioning power, the fourth allocated power allocated as the in-vehicle supplied power, and the second allocated power allocated as the drive power, when an air conditioning priority mode is set.
[FIG. 17] FIG. 17 is a diagram showing the priority levels of the first allocated power allocated as the auxiliary equipment power, the third allocated power allocated as the air conditioning power, the fourth allocated power allocated as the in-vehicle supplied power, and the second allocated power allocated as the drive power, when a driving priority mode is set.
[FIG. 18] FIG. 18 is a block diagram for explaining a configuration for supplying power to a second load.

### DESCRIPTION OF EMBODIMENTS

Hereinafter, an embodiment of the present invention will be described with reference to the drawings.

### <Overall Configuration of Power Supply Control System>

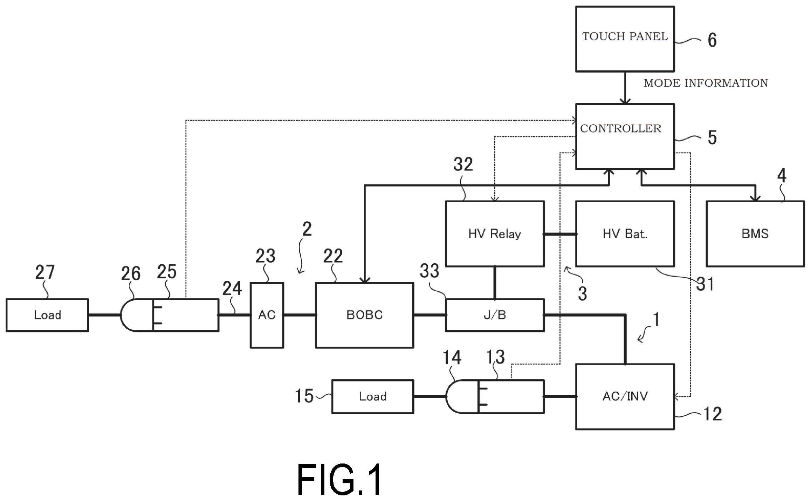

FIG. 1 is a block diagram of a power supply control system for an electric vehicle of the present embodiment. The power supply control system for the electric vehicle of the present embodiment sets, based on available output power (available supply power) of the battery 31 and the request from a driver, and the like, allocated power for a plurality of power supply systems configured around a battery 31 mounted on the electric vehicle.

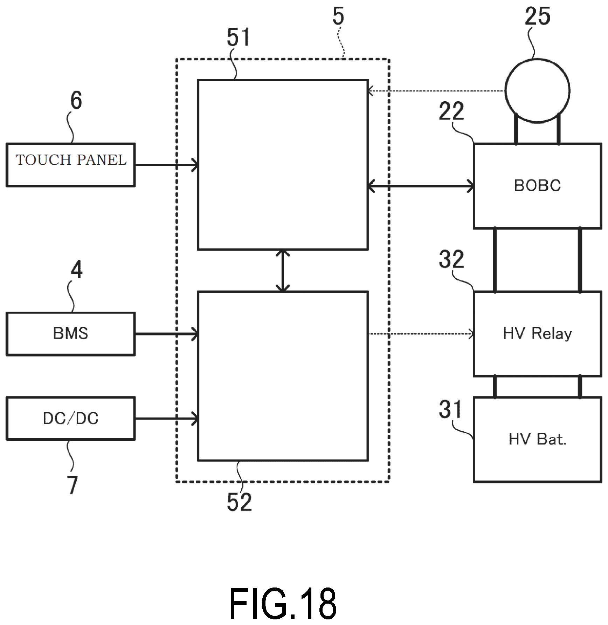

The plurality of power supply systems configured around the battery 31 include: an auxiliary equipment power supply system (not shown) that supplies power to auxiliary equipment of the electric vehicle (a DC/DC converter 7 (see FIG. 18) that supplies power to the auxiliary equipment essential for the control of the electric vehicle, such as a vehicle controller, and so forth); a drive power supply system (not shown) that supplies power to a drive motor (an inverter for the drive motor); an air conditioning power supply system (not shown) that supplies power to an air conditioning system (a compressor that pumps refrigerant for air conditioning); an in-vehicle power supply system 1 that supplies power mainly to a first load 15 disposed inside the vehicle; an off-vehicle power supply system 2 that supplies power mainly to a second load 27 disposed outside the vehicle; and a power supply system 3 that supplies power to the in-vehicle power supply system 1 and the off-vehicle power supply system 2. However, FIG. 1 shows the in-vehicle power supply system 1, the off-vehicle power supply system 2, and the power supply system 3.

The power supply system 3 includes the battery 31, a relay 32 (HV Relay), and a junction box 33 (J/B), and these are connected in series in this order. In addition, the in-vehicle power supply system 1 and the off-vehicle power supply system 2 are connected in parallel to the power supply system 3 (the junction box 33).

As the battery 31, for example, one having a structure in which a plurality of battery cells each formed of a lithium-ion battery (all-solid-state battery) are stacked and the plurality of battery cells are connected in parallel is applied.

The relay 32 executes or stops the power supply from the battery 31 to the in-vehicle power supply system 1 and the off-vehicle power supply system 2 in accordance with a command from a controller 5.

The junction box 33 normally supplies the power of the battery 31 to the in-vehicle power supply system 1 and the off-vehicle power supply system 2, but stops the power supply to the in-vehicle power supply system 1 and the off-vehicle power supply system 2 when an abnormality such as overcurrent is detected in the in-vehicle power supply system 1 or the off-vehicle power supply system 2.

The in-vehicle power supply system 1 includes an inverter 12 (AC/INV) and a first socket 13, and these are connected in series in this order. The inverter 12 is connected to the junction box 33. Then, a first plug 14 connected to the first load 15 is detachably connected to the first socket 13.

The first load 15 corresponds to a highly functional portable device (a smartphone), a battery for a digital camera, and other small-power electronic devices.

The inverter 12 converts the DC voltage of the battery 31 into an AC voltage and supplies the AC voltage to the first socket 13 (the first load 15), and the power thereof is controlled by the controller 5, which will be described later.

The off-vehicle power supply system 2 includes a bidirectional charger 22 (BOBC), an AC socket 23, an external cable 24, and a second socket 25, and these are connected in series in this order. The bidirectional charger 22 is connected to the junction box 33. Then, a second plug 26 connected to the second load 27 is detachably connected to the second socket 25.

The second load 27 corresponds to electrical appliances with relatively high power consumption, such as cooking appliances, camping appliances, gardening appliances, and so forth. In addition, an AC voltage plug (not shown) for a house or a charging station is also connected to the second socket 25 in place of the second load 27.

The bidirectional charger 22 is a bidirectional on-board charger, and converts the DC voltage of the battery 31 into an AC voltage in accordance with a command from the controller 5 and supplies the AC voltage to the second socket 25 (the second load 27). In addition, when the AC voltage plug (not shown) is connected, the bidirectional charger 22 converts the AC voltage into a DC voltage to charge the battery 31. Note that the power at the time of conversion from a DC voltage to an AC voltage and the power at the time of conversion from an AC voltage to a DC voltage are controlled by the command from the controller 5.

The AC socket 23 connects an internal circuit (the off-vehicle power supply system 2) of the electric vehicle and an external circuit (the off-vehicle power supply system 2) of the electric vehicle.

The external cable 24 has the second socket 25 attached to one end portion thereof, and the other end portion thereof is detachably attached to the AC socket 23.

As the battery 31, for example, one having a structure in which a plurality of battery cells each formed of a lithium-ion battery (all-solid-state battery) are stacked and the plurality of battery cells are connected in parallel is applied.

A battery management system 4 (BMS) monitors the state of charge (SOC) and temperature of the battery 31, and calculates the available output power that can be output from the battery 31 based on the state of charge and the temperature.

Here, the available output power becomes a substantially constant maximum value (the rated power) when the current temperature of the battery 31 is between a predetermined lower limit temperature and a predetermined upper limit temperature, which is higher than the lower limit temperature, and when the state of charge of the battery 31 is equal to or higher than a predetermined lower limit value; however, the available output power becomes lower than the substantially constant power when the current temperature becomes lower than the lower limit temperature, due to an increase in the internal resistance within the battery 31, and the available output power decreases monotonically as the current temperature falls further below the lower limit temperature. In addition, it is necessary to limit the available output power in order to avoid thermal damage to the battery 31 when the temperature of the battery 31 exceeds the upper limit temperature, and the higher the temperature rises above the upper limit temperature, the more the available output power must be limited.

Therefore, when the current temperature of the battery 31 becomes lower than the lower limit temperature or higher than the upper limit temperature, the battery management system 4 estimates the maximum available output power by referring to a map representing the relationship between the current temperature of the battery 31 and the available output power corresponding to the maximum output that does not impose undue stress on the battery 31, and outputs information on the estimated available output power to the controller 5, which will be described later.

In addition, when the state of charge of the battery 31 becomes lower than a predetermined lower limit value, the available output power decreases due to decrease in an open-circuit voltage, and the available output power decreases monotonically as the state of charge falls further below the lower limit value.

Therefore, when the state of charge of the battery 31 becomes lower than the lower limit value, the battery management system 4 estimates the maximum available output power by referring to a map representing the relationship between the state of charge of the battery 31 and the available output power corresponding to the maximum output that does not impose undue stress on the battery 31, and outputs information on the estimated available output power to the controller 5, which will be described later.

Note that the battery management system 4 performs management for preventing overcharging, over-discharging, and overcurrent in the battery cells constituting the battery 31, and management for equalizing the cell voltage of the battery cells.

The controller 5 is configured by one or a plurality of computers including, for example, a central processing unit (a CPU), a read-only memory (a ROM), a random access memory (a RAM), an input/output interface (an I/O interface), and the like. In addition, the controller 5 is programmed to control, at a predetermined control cycle, the auxiliary equipment (the DC/DC converter 7 (see FIG. 18)), the drive motor (the inverter for the drive motor), the air conditioning system (the compressor), the in-vehicle power supply system 1 (the inverter 12), the off-vehicle power supply system 2 (the bidirectional charger 22), and the like.

As described above, information on the available output power is input to the controller 5 from the battery management system 4.

The first socket 13 has a first detection unit (not shown) that is disposed to detect the first plug 14 when the first plug 14 is inserted into the first socket 13. Therefore, a first detection signal indicating that the first plug 14 has been detected is input to the controller 5 from the first detection unit (not shown).

The second socket 25 has a second detection unit (not shown) that is disposed to detect the second plug 26 when the second plug 26 is inserted into the second socket 25. Therefore, a second detection signal indicating that the second plug 26 has been detected is input to the controller 5 from the second detection unit (not shown).

The controller 5 sets the allocated power for the auxiliary equipment (first allocated power) (an initial value), the allocated power for the drive motor (second allocated power) (an initial value), the allocated power for the air conditioning system (third allocated power) (an initial value), the allocated power for the in-vehicle power supply system 1 (the inverter 12) (fourth allocated power) (an initial value), and the allocated power for the off-vehicle power supply system 2 (the bidirectional charger 22) (fifth allocated power) (an initial value).

In this case, the controller 5 performs setting such that the total sum of the allocated power from the first allocated power (the initial value) to the fifth allocated power (the initial value) becomes lower than the available output power (the rated power) of the battery 31.

Note that, as will be described later, when a setting is made such that the off-vehicle power supply system 2 (the off-vehicle power supply) and traveling of the electric vehicle (the drive power) cannot be selected simultaneously, the total sum of the first allocated power, the third allocated power, the fourth allocated power, and the fifth allocated power is set to be lower than the rated power, or the total sum of the first allocated power, the second allocated power, the third allocated power, and the fourth allocated power is set to be lower than the rated power.

However, when the available output power output by the battery management system 4 becomes lower than the total sum of the allocated power, it is necessary to limit any of the allocated power such that the total sum of the allocated power does not exceed the available output power.

However, if the first allocated power for the auxiliary equipment (the DC/DC converter 7 (see FIG. 18)) of the electric vehicle is limited, the entire electric vehicle becomes unable to be driven or controlled, and so, the first allocated power cannot be limited.

Therefore, when the electric vehicle is traveling, the controller 5 performs the control such that the total sum of the allocated power does not exceed the available supply power, which is obtained by subtracting the first allocated power from the available output power, by limiting at least any one of the second allocated power for the drive motor, the third allocated power for the air conditioning system, or the fourth allocated power for the in-vehicle power supply system 1.

In addition, when the off-vehicle power supply system 2 is in use, the controller 5 performs the control such that the total sum of the allocated power does not exceed the available supply power, which is obtained by subtracting the first allocated power from the available output power, by limiting at least any one of the third allocated power for the air conditioning system, the fourth allocated power for the in-vehicle power supply system 1, or the fifth allocated power for the off-vehicle power supply system 2.

Incidentally, mode information is input to the controller 5 from a touch panel 6. The mode information includes information on the priority level (modified priority level sequence) for using the drive motor, the air conditioning system, the in-vehicle power supply system 1, and the off-vehicle power supply system 2.

Therefore, when the second allocated power through the fifth allocated power is to be limited, the controller 5 limits the allocated power in order of increasing priority level (from low priority to high priority). However, regardless of the magnitude of the available output power, the controller 5 sets the fourth allocated power to zero if the first detection signal is not received, and sets the fifth allocated power to zero if the second detection signal is not received.

### [First Touch Panel Operation]

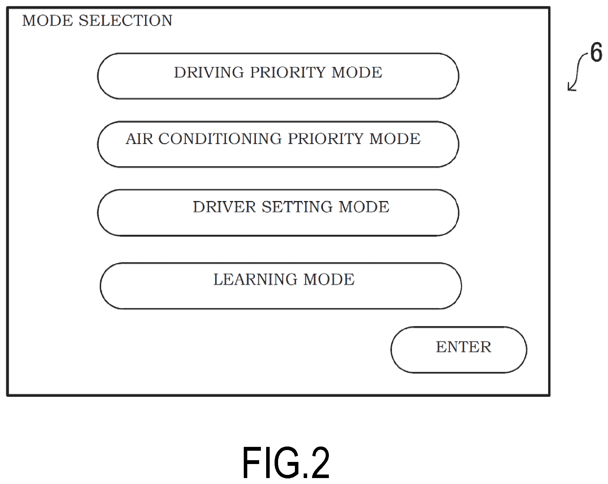

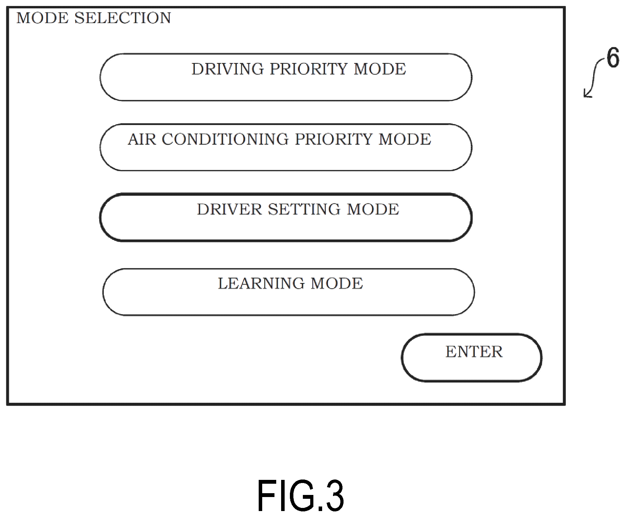

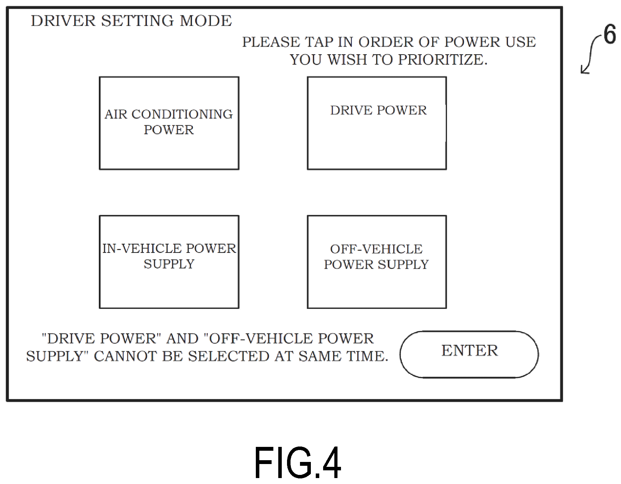

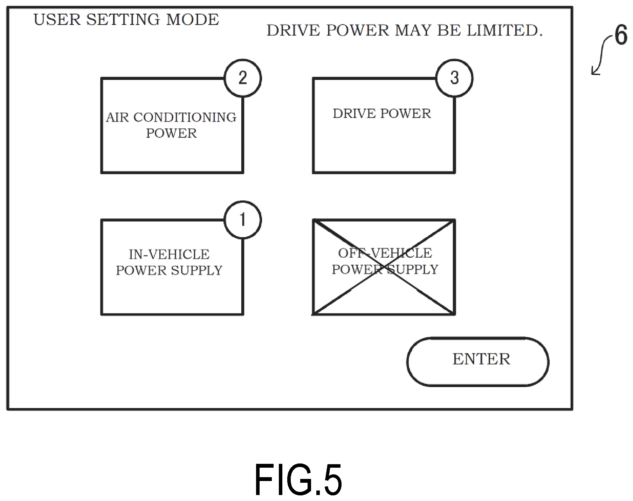

FIG. 2 is a diagram showing an initial state of the operation screen appearing on the touch panel 6 of the power supply control system for the electric vehicle. FIG. 3 is a diagram showing a state in which the driver has selected a driver setting mode by tapping the driver setting mode icon in FIG. 2. FIG. 4 is a diagram showing an initial state of the driver setting mode. FIG. 5 is a diagram showing a state in which the priority levels are indicated by numbers as a result of the driver performing tap operations on the selection icons for the air conditioning power, the drive power, the in-vehicle power supply, and the off-vehicle power supply displayed in the driver setting mode in the order of the in-vehicle power supply, the air conditioning power, and the drive power.

The touch panel 6 is disposed, for example, on a dashboard inside the cabin of the electric vehicle, and is used for operations related to the power supply control system of the present embodiment as well as other operations. For example, when the driver performs the tap operation on the touch panel 6 to activate the power supply control system, a mode selection screen appears as shown in FIG. 2.

On the mode selection screen, there are displayed: the selection icon for "Driving Priority Mode" for giving priority to the drive power during the traveling; the selection icon for "Air Conditioning Priority Mode" for giving priority to the air conditioning power during the traveling; the selection icon for "Driver Setting Mode" for allowing the driver to arbitrarily set the priority levels for the air conditioning power, the drive power, the in-vehicle power supply, and the off-vehicle power supply; and the selection icon for "Learning Mode" for setting the priority levels for the air conditioning power, the drive power, the in-vehicle power supply, and the off-vehicle power supply based on history information (the priority level most frequently selected for each selection icon) of the priority levels (the modified priority level sequence) set in "the driver setting mode".

Then, as shown in FIG. 3, for example, when the driver taps the selection icon for "Driver Setting Mode", the outline of the selection icon and the operation icon for "Enter" that is located at the lower right of the screen are highlighted. Then, when the driver taps the operation icon for "Enter", the screen switches to the dedicated screen for "the driver setting mode" as shown in FIG. 4.

As shown in FIG. 4, on the dedicated screen for "the driver setting mode", there are displayed the selection icon for "Air Conditioning Power", the selection icon for "Drive Power", the selection icon for "In-Vehicle Power Supply", and the selection icon for "Off-Vehicle Power Supply". In addition, as notes of caution, "Please tap in order of power use you wish to prioritize." and ""Drive Power" and "Off-Vehicle Power Supply" cannot be selected simultaneously." are displayed.

As shown in FIG. 5, for example, when the driver taps in the order of the selection icon for "In-Vehicle Power Supply", the selection icon for "Air Conditioning Power", and the selection icon for "Drive Power", the outlines of these selection icons are highlighted, and furthermore, a number "1" is displayed at the upper right part of the selection icon for "In-Vehicle Power Supply", a number "2" is displayed at the upper right part of the selection icon for "Air Conditioning Power", and a number "3" is displayed at the upper right part of the selection icon for "Drive Power", and thus, the priority levels can be confirmed with these numbers. Furthermore, an X mark is shown over the entire selection icon for "Off-Vehicle Power Supply", and thus, it is also possible to visually recognize that "the off-vehicle power supply" has been disabled. In addition, because the priority level of the drive power has been set to the third priority level (the lowest), a precautionary note reading "Drive power may be limited" is displayed.

Then, when the driver taps the operation icon for "Enter" at the lower right, the touch panel 6 outputs the mode information related to "the driver setting mode" to the controller 5, whereby the controller 5 starts first power supply control, which will be described later.

Note that it is also possible to apply a configuration in which the driver taps any one of the four selection icons for the functional elements related to "the air conditioning power", "the drive power", "the in-vehicle power supply", or "the off-vehicle power supply" shown in FIG. 4 and then taps the operation icon for "Enter" to designate only the functional element that is most desired to be prioritized among the four selection icons, and the controller 5 is capable of arbitrarily setting the priority levels for the remaining functional elements.

### [First Power Supply Control]

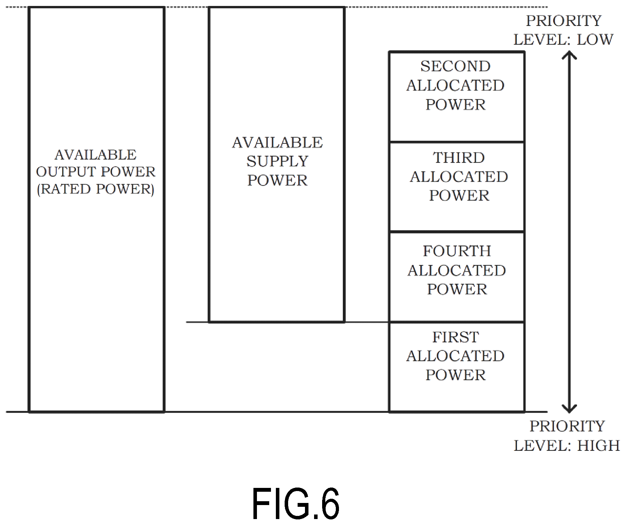

FIG. 6 is a diagram showing, in a case in which the driver setting mode is set as shown in FIG. 5, the relationship among the available output power, the available supply power, and the total sum of the first allocated power allocated as the auxiliary equipment power, the fourth allocated power allocated as the in-vehicle supplied power, the third allocated power allocated as the air conditioning power, and the second allocated power allocated as the drive power, in a case in which the available output power is higher than the total sum of the allocated power.

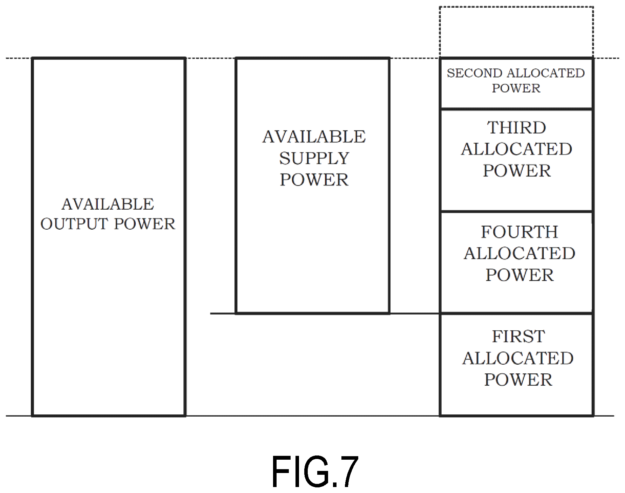

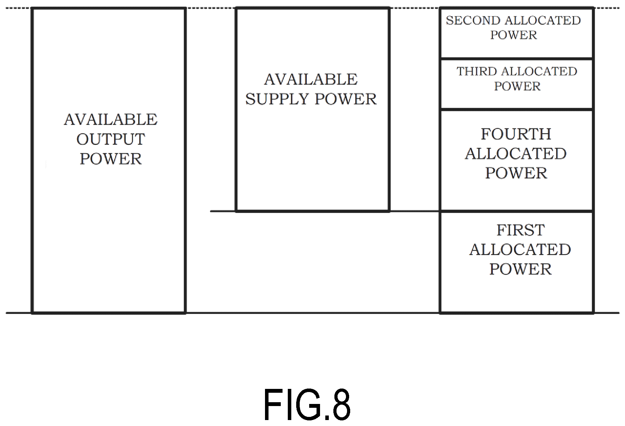

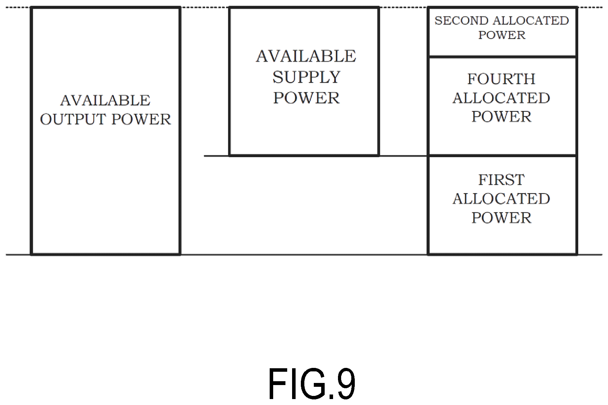

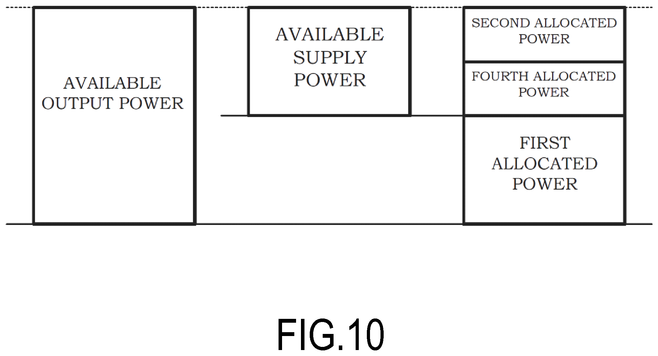

FIG. 7 is a diagram showing a case in which, from the state shown in FIG. 6, the available output power becomes lower than the total sum of the allocated power and the second allocated power is limited. FIG. 8 is a diagram showing a case in which, from the state shown in FIG. 7, the available output power is further decreased, the second allocated power is set to a predetermined first lower limit power, and the third allocated power is further limited. FIG. 9 is a diagram showing a case in which, from the state shown in FIG. 8, the available output power is further decreased and the third allocated power is set to zero. FIG. 10 is a diagram showing a case in which, from the state shown in FIG. 9, the available output power is further decreased and the fourth allocated power is limited.

Because the priority levels (the modified priority level sequence) are set by the driver in the order of the in-vehicle power supply (the fourth allocated power), the air conditioning power (the third allocated power), and the drive power (the second allocated power), the controller 5, as shown in FIG. 6, sets the priority levels in the order of the fourth allocated power (the in-vehicle power supply), the third allocated power (the air conditioning power), and the second allocated power (the drive power), and furthermore, the priority level of the first allocated power (the auxiliary equipment power) is set to be higher than the priority level of the fourth allocated power (the in-vehicle power supply).

As described above, when the available output power of the battery 31 is at the rated power, the total sum of the allocated power of the first allocated power, the fourth allocated power (the initial value), the third allocated power (the initial value), and the second allocated power (the initial value) is lower than the available output power (the rated power), and the total sum of the allocated power of the fourth allocated power (the initial value), the third allocated power (the initial value), and the second allocated power (the initial value) is lower than the available supply power.

As shown in FIG. 7, due to a decrease in the available output power and the available supply power, the available output power becomes lower than the total sum of the allocated power of the first allocated power, the fourth allocated power (the initial value), the third allocated power (the initial value), and the second allocated power (the initial value), and the available supply power becomes lower than the total sum of the allocated power of the fourth allocated power (the initial value), the third allocated power (the initial value), and the second allocated power (the initial value).

At this time, the controller 5 performs control (limitation) such that the total sum of the allocated power of the first allocated power, the fourth allocated power (the initial value), the third allocated power (the initial value), and the second allocated power (limitation target) does not exceed the available output power, and the total sum of the allocated power of the fourth allocated power (the initial value), the third allocated power (the initial value), and the second allocated power (the limitation target) does not exceed the available supply power, by limiting (decreasing) the second allocated power (the drive power) having the lowest priority level.

As shown in FIG. 8, when the available output power and the available supply power further decrease from the state shown in FIG. 7, the controller 5 limits the second allocated power to the predetermined first lower limit power, for example. Then, when the power that can be allocated as the drive power becomes lower than the first lower limit power, the controller 5 keeps the second allocated power (the first lower limit power) constant, sets the third allocated power having the priority level one level higher than that of the second allocated power, as the limitation target, and limits the third allocated power. As a result, the controller 5 performs the control (the limitation) such that the total sum of the first allocated power, the fourth allocated power (the initial value), the third allocated power (the limitation target), and the second allocated power (the first lower limit power) does not exceed the available output power, and the total sum of the fourth allocated power (the initial value), the third allocated power (the limitation target), and the second allocated power (the first lower limit power) does not exceed the available supply power.

As described above, by setting the second allocated power so as not to become lower than the predetermined first lower limit power, the electric vehicle is capable of traveling with the minimum necessary driving force. Note that, although the magnitude of the first lower limit power can be set arbitrarily, it is also possible to cause the electric vehicle to coast or stop by setting it to zero and setting the driving force of the electric vehicle to zero.

As shown in FIG. 9, when the available output power and the available supply power further decrease from the state shown in FIG. 8, the controller 5 sets the third allocated power to zero. At this time, the controller 5 continues to keep the second allocated power (the first lower limit power) constant, and sets the fourth allocated power, which has the priority level one level higher than that of the third allocated power, as the limitation target. As a result, the controller 5 performs the control such that the total sum of the allocated power of the first allocated power, the fourth allocated power (the limitation target), and the second allocated power (the first lower limit power) does not exceed the available output power, and the total sum of the allocated power of the fourth allocated power (the limitation target) and the second allocated power (the first lower limit power) does not exceed the available supply power.

As shown in FIG. 10, when the available output power and the available supply power further decrease from the state shown in FIG. 9, the controller 5 keeps the second allocated power (the first lower limit power) constant while proceeding to apply the limitation to the fourth allocated power (the limitation target). As a result, the controller 5 performs control such that the total sum of the allocated power of the first allocated power, the fourth allocated power (the limitation target), and the second allocated power (the first lower limit power) does not exceed the available output power, and the total sum of the allocated power of the fourth allocated power (the limitation target) and the second allocated power (the first lower limit power) does not exceed the available supply power.

Note that a configuration may also be adopted in which, in a case in which the power allocatable as the air conditioning power becomes lower than a predetermined second lower limit power due to a decrease in the available output power and the available supply power, the third allocated power is set to the second lower limit power, the fourth allocated power having the priority level higher than that of the third allocated power is set as the limitation target, and the fourth allocated power is limited. Here, similarly to the first lower limit power, the magnitude of the second lower limit power can be set arbitrarily. As a result, by setting the second lower limit power to a magnitude other than zero, the air conditioning can be maintained with the minimum necessary power even when the available output power and the available supply power decrease, and it is possible to extend the duration of air conditioning operation beyond that achievable when the second lower limit power is zero.

### [Second Touch Panel Operation]

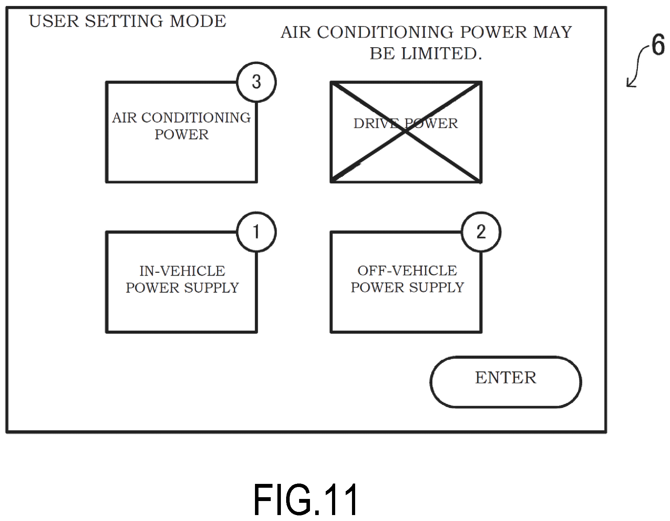

FIG. 11 is a diagram showing a state in which the priority levels are indicated by numbers as a result of the driver performing tap operations on the icons for the air conditioning power, the drive power, the in-vehicle power supply, and the off-vehicle power supply displayed in the driver setting mode in the order of the in-vehicle power supply, the off-vehicle power supply, and the air conditioning power.

As shown in FIG. 11, for example, the driver taps the icon for "In-Vehicle Power Supply" and the icon for "Off-Vehicle Power Supply". At this time, a number "1" is further displayed at the upper right part of the icon for "In-Vehicle Power Supply", a number "2" is displayed at the upper right part of the icon for "Off-Vehicle Power Supply", and an X mark is shown over the entire icon for "Drive Power". When the driver further taps the icon for "Air Conditioning Power", a number "3" is displayed at the upper right part of the icon for "Air Conditioning Power", and the priority levels can be confirmed with these numbers. In addition, because the priority level of the air conditioning power has been set to the third priority level (the lowest), a precautionary note reading "Air conditioning power may be limited" is displayed.

Then, when the driver taps the icon for "Enter" at the lower right, the touch panel 6 outputs the mode information related to "the driver setting mode" to the controller 5, whereby the controller 5 starts the second power supply control, which will be described later.

### [Second Power Supply Control]

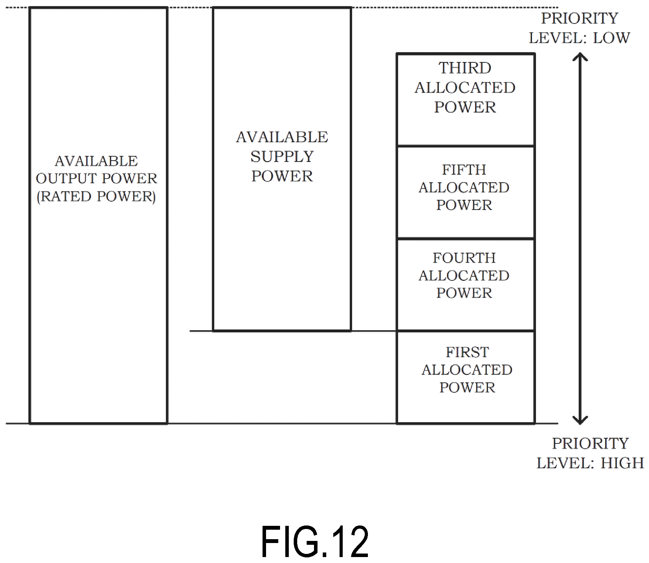

FIG. 12 is a diagram showing, when the driver setting mode is set as shown in FIG. 11, the relationship among the available output power, the available supply power, and the total sum of the first allocated power allocated as the auxiliary equipment power, the fourth allocated power allocated as the in-vehicle supplied power, the fifth allocated power allocated as the off-vehicle supplied power, and the third allocated power allocated as the air conditioning power, in a case in which the available output power is larger than the total sum of the allocated power.

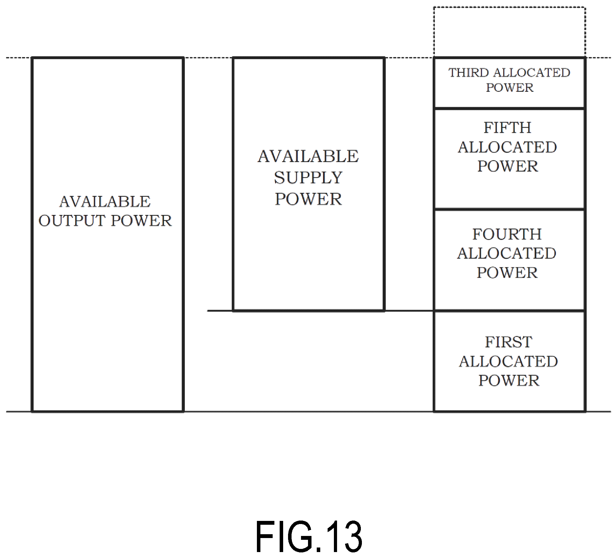

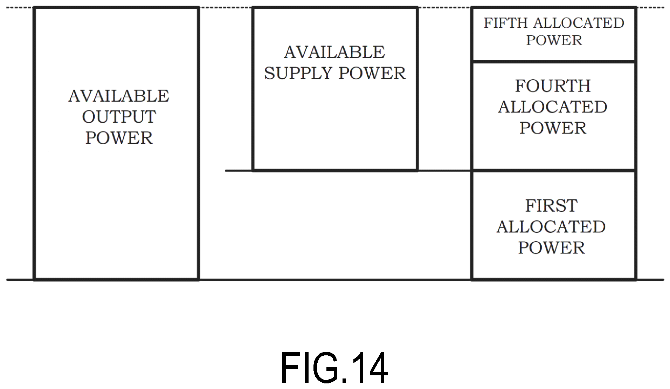

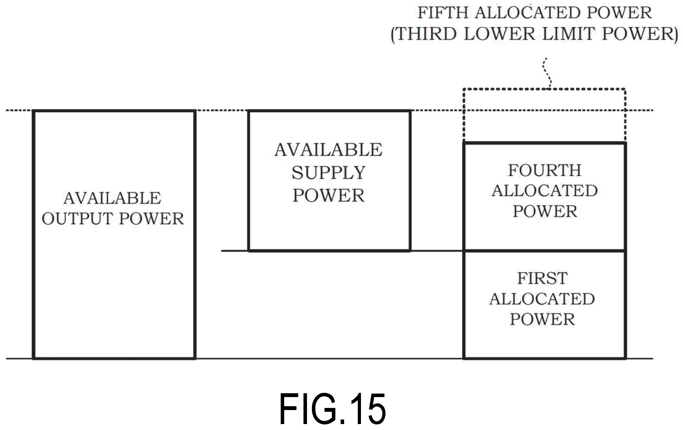

FIG. 13 is a diagram showing a case in which, from the state shown in FIG. 12, the available output power becomes lower than the total sum of the allocated power and the third allocated power is limited. FIG. 14 is a diagram showing a case in which, from the state shown in FIG. 13, the available output power is further decreased, the third allocated power is set to zero, and the fifth allocated power is further limited. FIG. 15 is a diagram showing a case in which, from the state shown in FIG. 14, the available output power is further decreased and the fifth allocated power is set to zero because the power allocatable to the off-vehicle power supply becomes lower than the third lower limit power set for the fifth allocated power.

Because the priority levels (modified priority level sequence) are set by the driver in the order of the in-vehicle power supply (the fourth allocated power), the off-vehicle power supply (the fifth allocated power), and the air conditioning power (the third allocated power), the controller 5, as shown in FIG. 12, sets the priority levels in the order of the fourth allocated power (the in-vehicle power supply), the fifth allocated power (the off-vehicle power supply), and the third allocated power (the air conditioning power), and furthermore, the first allocated power (the auxiliary equipment power) is set to have the priority level higher than that of the fourth allocated power (the in-vehicle power supply).

As described above, when the available output power of the battery 31 is at the rated power, the total sum of the allocated power of the first allocated power, the fourth allocated power (the initial value), the fifth allocated power (the initial value), and the third allocated power (the initial value) is lower than the available output power (the rated power), and the total sum of the allocated power of the fourth allocated power (the initial value), the fifth allocated power (the initial value), and the third allocated power (the initial value) is lower than the available supply power.

As shown in FIG. 13, due to a decrease in the available output power and the available supply power, the available output power becomes lower than the total sum of the allocated power of the first allocated power, the fourth allocated power (the initial value), the fifth allocated power (the initial value), and the third allocated power (the initial value), and the available supply power becomes lower than the total sum of the allocated power of the fourth allocated power (the initial value), the fifth allocated power (the initial value), and the third allocated power (the initial value).

At this time, the controller 5 performs control such that the total sum of the allocated power of the first allocated power, the fourth allocated power (the initial value), the fifth allocated power (the initial value), and the third allocated power (the limitation target) does not exceed the available output power, and the total sum of the allocated power of the fourth allocated power (the initial value), the fifth allocated power (the initial value), and the third allocated power (the limitation target) does not exceed the available supply power, by limiting (decreasing) the third allocated power (the air conditioning power) having the lowest priority level.

As shown in FIG. 14, when the available output power and the available supply power further decrease from the state shown in FIG. 13, the controller 5 sets the third allocated power to zero and further limits the fifth allocated power. As a result, the controller 5 performs control such that the total sum of the allocated power of the first allocated power, the fourth allocated power (the initial value), and the fifth allocated power (the limitation target) becomes lower than the available output power, and the total sum of the allocated power of the fourth allocated power (the initial value) and the fifth allocated power (the limitation target) becomes lower than the available supply power.

As shown in FIG. 15, when the available output power and the available supply power further decrease from the state shown in FIG. 14, the controller 5 calculates the fifth allocated power as a value that is zero or greater but lower than a preset third lower limit power (a predetermined power). At this time, even when the power allocatable as the fifth allocated power is zero or greater, in a case in which it becomes lower than the third lower limit power, the controller 5 sets the fifth allocated power to zero. As a result, by terminating "the off-vehicle power supply" when the power that can be supplied to "the off-vehicle power supply" (the fifth allocated power) becomes lower than the third lower limit power and "the off-vehicle power supply" cannot be effectively executed, it is possible to increase the amount of power supplied to "the in-vehicle power supply" (the fourth allocated power) having the priority level higher than that of "the off-vehicle power supply" (the fifth allocated power) by the corresponding amount. Thereafter, when the available output power and the available supply power further decrease, the fourth allocated power is limited (see FIG. 10). Note that it is also possible to apply a configuration in which the fourth allocated power is set to zero in order to terminate "the in-vehicle power supply" when the power that can be supplied to "the in-vehicle power supply" becomes lower than the predetermined third lower limit power and "the in-vehicle power supply" cannot be effectively executed.

### [Air Conditioning Priority Mode]

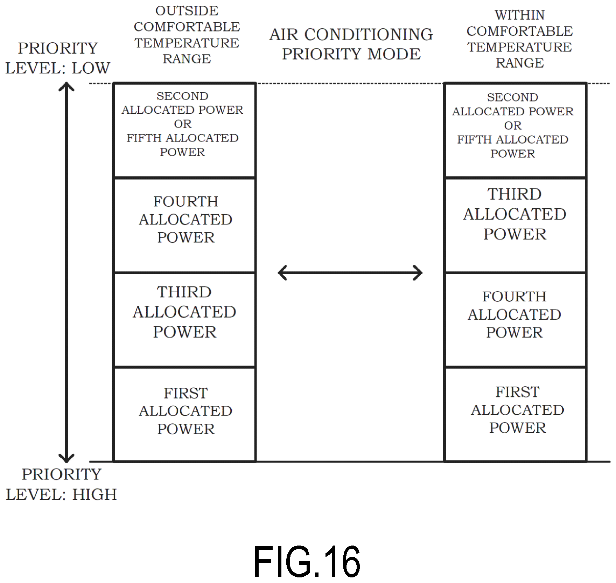

FIG. 16 is a diagram showing the priority levels of the first allocated power allocated as the auxiliary equipment power, the third allocated power allocated as the air conditioning power, the fourth allocated power allocated as the in-vehicle supplied power, and the second allocated power allocated as the drive power, when the air conditioning priority mode is set.

When the driver selects "the air conditioning priority mode" in the mode selection shown in FIG. 2, the controller 5 sets the priority levels in the order of the first allocated power (the auxiliary equipment power), the third allocated power (the air conditioning system), the fourth allocated power (the in-vehicle power supply), and the second allocated power (the drive power) (or the fifth allocated power) when the outside air temperature or the cabin interior temperature is higher or lower with respect to the comfortable temperature range (for example, 18°C to 22°C), thereby falling outside the comfortable temperature range, and sets the priority levels in the order of the first allocated power (the auxiliary equipment power), the fourth allocated power (the in-vehicle power supply), the third allocated power (the air conditioning system), and the second allocated power (the drive power) (or the fifth allocated power) when the outside air temperature or the cabin interior temperature falls within the comfortable temperature range.

As described above, when there is a likelihood that the driver will use the air conditioning system at high output, the driver is capable of using the air conditioning system without dissatisfaction by setting the priority level of the third allocated power high, and when the likelihood is low, the driver is capable of using the in-vehicle power supply without dissatisfaction by setting the priority level of the third allocated power low, and instead, setting the priority level of the fourth allocated power (the in-vehicle power supply) higher, for example.

Note that, even when the driver selects the air conditioning priority mode, the driver is capable of arbitrarily setting the priority level of the fourth allocated power through the touch panel 6 (see FIGs. 1 and 2), and the third allocated power and the second allocated power are set to priority levels different from the priority level of the fourth allocated power. In addition, the driver is capable of setting the priority level of the fifth allocated power through the touch panel 6 (see FIGs. 1 and 2), and the third allocated power and the fourth allocated power are set to priority levels different from the priority level of the fifth allocated power.

### [Driving Priority Mode]

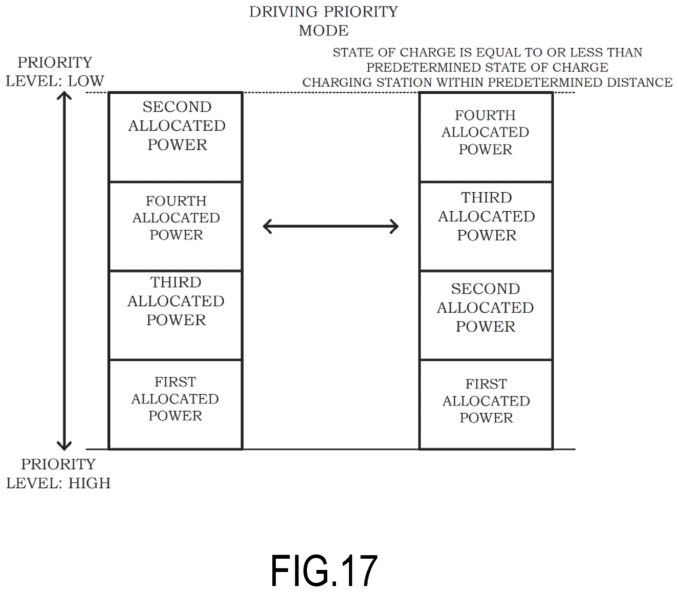

FIG. 17 is a diagram showing the priority levels of the first allocated power allocated as the auxiliary equipment power, the third allocated power allocated as the air conditioning power, the fourth allocated power allocated as the in-vehicle supplied power, and the second allocated power allocated as the drive power, when the driving priority mode is set.

The controller 5 (see FIG. 1) is capable of acquiring, through the Internet and the like, information on the position of the own vehicle (the electric vehicle) and traffic information (such as the position of charging stations) on the road ahead on which the own vehicle travels. In addition, the battery management system 4 (see FIG. 1) outputs information on the state of charge of the battery 31 to the controller 5.

When the driver selects "the driving priority mode" in the mode selection shown in FIG. 2, the controller 5 normally sets the priority levels in the order of the first allocated power (the auxiliary equipment power), the third allocated power (the air conditioning system), the fourth allocated power (the in-vehicle power supply), and the second allocated power (the drive power). Note that this priority level (the default priority level) is also set when the driver does not perform the mode selection shown in FIG. 2, and, excluding the auxiliary equipment power, the priority level of "the air conditioning power" is set to the highest.

When the controller 5 determines that the state of charge of the battery 31 is equal to or less than a predetermined state of charge and a charging station is ahead on the travel path of the own vehicle and is within a predetermined distance, the controller 5 sets the priority levels in the order of the first allocated power (the auxiliary equipment power), the second allocated power (the drive power), the third allocated power (the air conditioning system), and the fourth allocated power (the in-vehicle power supply), and displays, for example, the text "Please charge at the next charging station" on the touch panel 6 (see FIG. 2) to prompt the driver to charge the battery 31. In addition, when the controller 5 determines that a charging station is ahead on the travel path of the own vehicle and is within a predetermined distance, regardless of the state of charge of the battery 31, the controller 5 may switch the priority levels as described above and prompt the driver to charge in the same manner as described above.

Note that, even when the driver selects the driving priority mode, the driver is capable of arbitrarily setting the priority level (the modified priority level sequence) of the fourth allocated power through the touch panel 6 (see FIGs. 1 and 2), and the third allocated power and the second allocated power are set to priority levels different from the priority level (the modified priority level sequence) of the fourth allocated power.

### [Power Supply to Second Load 27]

FIG. 18 is a block diagram for explaining a configuration for supplying power to the second load 27. The controller 5 includes, for example, a first controller 51 that controls the bidirectional charger 22 and a second controller 52 that controls the relay 32. In FIG. 18, the in-vehicle power supply system 1 (the first load 15) and the junction box 33 shown in FIG. 1 are omitted.

Here, the description will be made on the assumption that the first load 15 (the first plug 14) is not connected to the in-vehicle power supply system 1 (the first socket 13) and the second load 27 is connected to the off-vehicle power supply system 2 (the second socket 25) (see FIG. 1); however, the same function is also achieved in a state in which the first load 15 is connected to the in-vehicle power supply system 1 and the second load 27 is connected to the off-vehicle power supply system 2 (see FIG. 1), or in a state in which the first load 15 is connected to the in-vehicle power supply system 1 and the second load 27 is not connected to the off-vehicle power supply system 2 (see FIG. 1). Then, when the available output power and the available supply power decrease, and the power that can be supplied to the in-vehicle power supply system 1 (the first load 15) is lower than a predetermined power (a fourth lower limit power (the magnitude can be set arbitrarily)), it is sufficient to set the fourth allocated power to zero, set the allocated power of the functional element having the priority level higher than that of the in-vehicle power supply as the limitation target, and limit the allocated power.

The second detection signal is input to the first controller 51 from the second detection unit (not shown) that is disposed at the second socket 25, and thus the first controller 51 detects that the second load 27 has been connected to the second socket 25.

The mode information is input to the first controller 51 from the touch panel 6, and information on the priority levels (the modified priority level sequence) of the second allocated power (the drive power), the third allocated power (the air conditioning power), and the fifth allocated power (the off-vehicle power supply) set by the driver (here, the fourth allocated power (the in-vehicle power supply) is either not incorporated into the priority levels or, even if incorporated into the priority levels, its value is set to zero), or information on the priority mode, is input.

Information on the available output power is input to the second controller 52 from the battery management system 4, and information on required power is input from the DC/DC converter 7 that drives the auxiliary equipment. Note that the input of the required power information may also be omitted by regarding the required power from the DC/DC converter 7 as constant (the first allocated power).

The second controller 52 calculates the available supply power by subtracting the required power (the first allocated power) from the available output power, and outputs information on the available supply power to the first controller 51.

The first controller 51 has information on the second allocated power (the initial value), the third allocated power (the initial value), and the fifth allocated power (the initial value).

When the available supply power is higher than the total sum of the fifth allocated power (the initial value) and the third allocated power (the initial value), or when the available supply power is lower than the total sum but the fifth allocated power is not the limitation target, the first controller 51 transmits a relay-ON signal to the second controller 52, and thereby, the second controller 52 sets the relay 32 to the ON state. In addition, the first controller 51 sets the output of the bidirectional charger 22 to the fifth allocated power (the initial value). As a result, the second load 27 is charged by the fifth allocated power (the initial value).

When the available supply power is lower than the total sum of the fifth allocated power (the initial value) and the third allocated power (the initial value), the fifth allocated power is the limitation target, and its magnitude is equal to or higher than the predetermined third lower limit power, the first controller 51 transmits the relay-ON signal to the second controller 52, and thereby, the second controller 52 sets the relay 32 to the ON state. In addition, the first controller 51 sets the output of the bidirectional charger 22 to the fifth allocated power (the power after limitation). As a result, the second load 27 is charged by the fifth allocated power (the power after limitation, being power equal to or greater than the third lower limit power).

When the available supply power is lower than the total sum of the allocated power, and the fifth allocated power is the limitation target and its magnitude is lower than the predetermined third lower limit power, the first controller 51 transmits a relay-OFF signal to the second controller 52, and thereby, the second controller 52 sets the relay 32 to the OFF state. In addition, the first controller 51 sets the output of the bidirectional charger 22 to zero. As a result, charging of the second load 27 is stopped.

### [Effects of the Present Embodiment]

The power supply control method for the electric vehicle of the present embodiment is the power supply control method for the electric vehicle in which one of the plurality of functional elements constituting the electric vehicle (the auxiliary equipment, the drive motor, the air conditioning system, the in-vehicle power supply system 1, the off-vehicle power supply system 2) is the external power supply system for supplying power to outside (the in-vehicle power supply system 1 and/or the off-vehicle power supply system 2), the power supply control method including: setting the allocated power individually for the plurality of functional elements serving as the operation targets for the driver (the drive motor, the air conditioning system, the in-vehicle power supply system 1, the off-vehicle power supply system 2); setting the default priority level for using the functional elements for the plurality of functional elements(the priority levels set in the order of the third allocated power, the fourth allocated power, and the second allocated power (left side in FIG. 17)); and when the available supply power becomes lower than the total sum of the allocated power, the available supply power being power capable of being simultaneously supplied to the plurality of functional elements by the battery 31 mounted on the electric vehicle, limiting the allocated power of the functional elements in order of increasing default priority level such that the total sum of the allocated power does not exceed the available supply power, wherein when information on the requested priority level (see FIG. 5) of the external power supply system is input in accordance with the request from the driver (the operation of the touch panel 6), information on the modified priority level sequence (see FIGs. 6 and 12) including the requested priority level is generated for the plurality of functional elements, and the allocated power of the functional elements is limited in order of increasing priority level in the modified priority level sequence such that the total sum of the allocated power does not exceed the available supply power.

According to the above method, because the driver is capable of arbitrarily setting the priority level for using the external power supply system (the in-vehicle power supply system 1, the off-vehicle power supply system 2), the external power supply in accordance with the request from the driver can be executed without causing discomfort to the driver even in a situation in which the available supply power of the battery 31 has decreased.

In the present embodiment, when the allocated power of the plurality of functional elements is to be limited due to a decrease in the available supply power, while maintaining the allocated power of all of the functional elements having a higher priority level in the modified priority level sequence than the functional element set to be the limitation target of the allocated power, the allocated power of the functional element set to be the limitation target is limited, and subsequently, after the available supply power further decreases and the allocated power becomes zero, the next limitation target is set for the allocated power of the functional element having a priority level one level higher in the modified priority level sequence than the functional element, whose allocated power has been set to zero.

According to the above method, even when the available supply power of the battery 31 decreases, the allocated power of the functional elements having high priority levels in the modified priority level sequence is not immediately limited, and therefore, it is possible to perform power supply intended by the driver for each functional element.

In the present embodiment, the plurality of priority modes are set in the modified priority level sequence, the plurality of priority modes being set such that the priority levels of at least a part of the plurality of functional elements other than the external power supply system (the in-vehicle power supply system 1, the off-vehicle power supply system 2) among the plurality of functional elements are different from each other, and the priority modes are set so as to be selectable by the driver.

According to the above method, the plurality of priority modes corresponding to the driver's usage scenarios are set, and because the driver is capable of selecting a specific priority mode upon understanding the usage scenario, the priority level for power supply intended by the driver can be set easily.

In the present embodiment, when the allocated power of the external power supply system (the in-vehicle power supply system 1, the off-vehicle power supply system 2) is to be limited and when the allocated power is to be limited to less than the predetermined power (the fourth lower limit power, the third lower limit power) that is lower than the initial value of the allocated power of the external power supply system, the allocated power of the external power supply system (the fourth allocated power, the fifth allocated power) is set to zero.

According to the above method, when the power capable of being supplied to the external power supply system becomes lower than the predetermined power (the fourth lower limit power, the third lower limit power) and it is not possible to perform effective power supply to a power supply target connected to the external power supply system, by terminating the power supply to the external power supply system, it is possible to increase the amount of power supplied to the functional elements having the priority level higher than that of the external power supply system by the corresponding amount.

In the present embodiment, the power supply control method further includes: when the allocated power (the first allocated power) and the default priority level (for example, the first level) are set for the specific functional element (the auxiliary equipment), the specific functional element being included in the plurality of functional elements and excluded from a operation target for the driver, calculating, based on a state of the battery 31, the available output power capable of being output by the battery 31; setting the available supply power by a difference obtained by subtracting the allocated power (the first allocated power) of the specific functional element (the auxiliary equipment) from the available output power; and setting the priority level of the specific functional element (the auxiliary equipment) in the modified priority level sequence to the default priority level (for example, the first level) of the specific functional element (the auxiliary equipment).

According to the above method, by ensuring the priority level (for example, the first level) of the allocated power of the auxiliary equipment that is essential for the control of the electric vehicle, it is possible to stably perform the control of the electric vehicle even when the available output power and the available supply power of the battery 31 decrease.

In the present embodiment, the plurality of functional elements serving as the operation targets for the driver include the drive motor configured to drive the electric vehicle and the air conditioning system configured to air-condition the cabin interior of the electric vehicle, and the priority mode includes: the driving priority mode for setting the priority level of the drive motor in the modified priority level sequence based on the traffic information (information on the position of the own vehicle (the electric vehicle) and information on the position of a charging station); and the air conditioning priority mode for setting the priority level of the air conditioning system in the modified priority level sequence based on the ambient temperature of the electric vehicle.

According to the above-described configuration, because it is possible to select the driving priority mode in which the priority level of the drive motor is changed based on the traffic information and the air conditioning priority mode in which the priority level of the air conditioning system is changed based on the ambient temperature of the electric vehicle, the priority level of the functional elements set by the driver can be changed in response to changes in the surrounding environment of the electric vehicle, and convenience for the driver can be enhanced.

In the present embodiment, the priority mode includes: the settings-priority mode for allowing the driver to further set the modified priority level sequence of the plurality of functional elements other than the external power supply system among the plurality of functional elements; and the learning mode for setting the modified priority level sequence upon the request based on the history information of the modified priority level sequence.

According to the above method, by allowing the driver to select the settings-priority mode, it is possible to improve the degree of freedom in selecting the priority level for the allocated power, and by allowing the driver to select the learning mode, the setting of the priority level for the allocated power intended by the driver can be performed easily.

The power supply control system for the electric vehicle of the present embodiment is the power supply control system for the electric vehicle including: the battery 31 mounted on the electric vehicle; the allocated power setting unit (the controller 5) configured to individually set the allocated power for the plurality of functional elements constituting the electric vehicle (the auxiliary equipment, the drive motor, the air conditioning system, the in-vehicle power supply system 1, the off-vehicle power supply system 2), the plurality of functional elements serving as the operation targets for the driver (the auxiliary equipment, the drive motor, the air conditioning system, the in-vehicle power supply system 1, the off-vehicle power supply system 2); the priority level setting unit (the controller 5) configured to set the default priority level (the priority levels set in the order of the third allocated power, the fourth allocated power, and the second allocated power (left side in FIG. 17)) for using the functional elements for the plurality of functional elements; and the power control unit (the controller 5) configured to limit, when the available supply power becomes lower than the total sum of the allocated power, the available supply power being the power capable of being simultaneously supplied to the plurality of functional elements by the battery 31, the allocated power of the functional elements in order of increasing default priority level such that the total sum of the allocated power does not exceed the available supply power, wherein one of the plurality of functional elements is the external power supply system (the in-vehicle power supply system 1 and/or the off-vehicle power supply system 2) for supplying the power to the outside, the power supply control system further comprising the input unit (the touch panel 6) configured to generate information on the requested priority level of the external power supply system (the in-vehicle power supply system 1 and/or the off-vehicle power supply system 2) and to output the information to the power control unit (the controller 5), the power control unit (the controller 5) is configured to generate, when the information on the requested priority level is input, the information on the modified priority level sequence (see FIGs. 6 and 12) including the requested priority level for the plurality of functional elements (see FIG. 5), and to limit the allocated power of the functional elements in order of increasing priority level in the modified priority level sequence such that the total sum of the allocated power does not exceed the available supply power.

According to the above-described configuration, because the driver is capable of arbitrarily setting the priority level for using the external power supply system (the in-vehicle power supply system 1, the off-vehicle power supply system 2), the external power supply in accordance with the request from the driver can be executed even in a situation in which the available supply power of the battery 31 has decreased.

Although the embodiment of the present invention has been described above, the above embodiment merely shows a part of application examples of the present invention, and is not intended to limit the technical scope of the present invention to the specific configuration of the above embodiment.

## Claims

1. A power supply control method for an electric vehicle in which one of a plurality of functional elements constituting the electric vehicle is an external power supply system for supplying power to outside, the power supply control method comprising:
setting allocated power individually for the plurality of functional elements serving as operation targets for a driver;
setting a default priority level for using the functional elements for the plurality of functional elements; and
when available supply power becomes lower than a total sum of the allocated power, the available supply power being power capable of being simultaneously supplied to the plurality of functional elements by a battery mounted on the electric vehicle, limiting the allocated power of the functional elements in order of increasing default priority level such that the total sum of the allocated power does not exceed the available supply power, wherein
when information on a requested priority level of the external power supply system is input in accordance with a request from a driver, information on a modified priority level sequence including the requested priority level is generated for the plurality of functional elements, and the allocated power of the functional elements is limited in order of increasing priority level in the modified priority level sequence such that the total sum of the allocated power does not exceed the available supply power.

2. The power supply control method for the electric vehicle according to claim 1, wherein, when the allocated power of the plurality of functional elements is to be limited due to a decrease in the available supply power, while maintaining the allocated power of all of the functional elements having a higher priority level in the modified priority level sequence than the functional element set to be a limitation target of the allocated power, the allocated power of the functional element set to be the limitation target is limited, and subsequently, after the available supply power further decreases and the allocated power becomes zero, the next limitation target is set for the allocated power of the functional element having a priority level one level higher in the modified priority level sequence than the functional element, whose allocated power has been set to zero.

3. The power supply control method for the electric vehicle according to claim 1, wherein a plurality of priority modes are set in the modified priority level sequence, the priority modes being set such that the priority levels of at least a part of the plurality of functional elements other than the external power supply system among the plurality of functional elements are different from each other, and the priority modes are set so as to be selectable by the driver.

4. The power supply control method for the electric vehicle according to claim 1, wherein when the allocated power of the external power supply system is to be limited and when the allocated power is to be limited to less than a predetermined power that is lower than an initial value of the allocated power of the external power supply system, the allocated power of the external power supply system is set to zero.

5. The power supply control method for the electric vehicle according to claim 1, further comprising: when the allocated power and the default priority level are set for a specific functional element, the specific functional element being included in the plurality of functional elements and excluded from a operation target for the driver,
calculating, based on a state of the battery, available output power capable of being output by the battery;
setting the available supply power by a difference obtained by subtracting the allocated power of the specific functional element from the available output power; and
setting a priority level of the specific functional element in the modified priority level sequence to the default priority level of the specific functional element.

6. The power supply control method for the electric vehicle according to claim 3, wherein
the plurality of functional elements serving as the operation targets for the driver include
a drive motor configured to drive the electric vehicle and an air conditioning system configured to air-condition a cabin interior of the electric vehicle, and
the priority mode includes:
a driving priority mode for setting a priority level of the drive motor in the modified priority level sequence based on traffic information; and
an air conditioning priority mode for setting a priority level of the air conditioning system in the modified priority level sequence based on an ambient temperature of the electric vehicle.

7. The power supply control method for the electric vehicle according to claim 3, wherein the priority mode includes:
a settings-priority mode for allowing the driver to further set the modified priority level sequence of the plurality of functional elements other than the external power supply system among the plurality of functional elements; and
a learning mode for setting the modified priority level sequence upon the request based on history information of the modified priority level sequence.

8. A power supply control system for an electric vehicle comprising:
a battery mounted on the electric vehicle;
an allocated power setting unit configured to individually set allocated power for a plurality of functional elements constituting the electric vehicle, the plurality of functional elements serving as operation targets for a driver;
a priority level setting unit configured to set a default priority level for using the functional elements for the plurality of functional elements; and
a power control unit configured to limit, when available supply power becomes lower than a total sum of the allocated power, the available supply power being power capable of being simultaneously supplied to the plurality of functional elements by the battery, the allocated power of the functional elements in order of increasing default priority level such that the total sum of the allocated power does not exceed the available supply power, wherein
one of the plurality of functional elements is an external power supply system for supplying power to outside, the power supply control system of the electric vehicle further comprising
an input unit configured to generate information on a requested priority level of the external power supply system and to output the information to the power control unit, wherein
the power control unit is configured
to generate, when the information on the requested priority level is input, information on a modified priority level sequence including the requested priority level for the plurality of functional elements, and to limit the allocated power of the functional elements in order of increasing priority level in the modified priority level sequence such that the total sum of the allocated power does not exceed the available supply power.
